(19) **Europäisches Patentamt / European Patent Office / Office européen des brevets**

(11) **EP 1 762 587 A1**

(12) **EUROPEAN PATENT APPLICATION**
published in accordance with Art. 158(3) EPC

(43) Date of publication:
**14.03.2007 Bulletin 2007/11**

(21) Application number: **05726982.1**

(22) Date of filing: **24.03.2005**

(51) Int Cl.:
*C08J 5/18* (2006.01)    *B32B 27/18* (2006.01)
*C08K 3/00* (2006.01)    *C08K 3/04* (2006.01)
*C08K 7/06* (2006.01)    *C08L 101/00* (2006.01)
*H01B 1/24* (2006.01)    *H01B 5/16* (2006.01)
*H01G 9/016* (2006.01)    *H01M 4/66* (2006.01)
*C08L 101/00* (2006.01)

(86) International application number:
**PCT/JP2005/005429**

(87) International publication number:
**WO 2005/090452 (29.09.2005 Gazette 2005/39)**

(84) Designated Contracting States:
**DE**

(30) Priority: **24.03.2004 JP 2004086809**
**29.03.2004 JP 2004095040**

(71) Applicant: **MITSUBISHI PLASTICS, INC.**
**Chiyoda-ku,**
**Tokyo 100-0005 (JP)**

(72) Inventors:
• **MIYAGAWA, Michinari**
**Kanagawa (JP)**

• **IMAI, Takashi**
**Kanagawa (JP)**
• **SUGIE, Saori**
**Kanagawa (JP)**

(74) Representative: **Skuhra, Udo**
**Reinhard-Skuhra-Weise & Partner GbR**
**Friedrichstrasse 31**
**80801 München (DE)**

(54) **CONDUCTIVE THERMOPLASTIC RESIN FILM AND LAYERED CONDUCTIVE THERMOPLASTIC RESIN FILM**

(57)    [Problem]

An object of the invention is to provide a thermoplastic-resin film and a thermoplastic-resin laminate film which have excellent conductivity and are further excellent in water vapor barrier properties and/or tackiness.

[Means for Resolution]

A conductive thermoplastic-resin film which comprises a mixture of a thermoplastic resin and a conductive material and having a volume resistivity, as measured by the four-probe method in accordance with JIS K-7194, of 10 $\Omega \cdot$cm or lower and a moisture permeability, as measured at a film thickness of 100 $\mu$m by JIS K-7129 method B in an atmosphere of 40°C and a relative humidity (RH) of 90%, of 10 g/(m$^2 \cdot$24 hr) or lower.

EP 1 762 587 A1

## Description

Technical Field

The present invention relates to a thermoplastic-resin film and a thermoplastic-resin laminate film each having excellent electrical conductivity. More particularly, the invention relates to the thermoplastic-resin film and thermoplastic-resin laminate film further excellent in water vapor barrier properties and/or tackiness.

Background Art

Electric double-layer capacitors are often used in the form of a combination of two or more electric double-layer capacitor cells connected in series or in parallel for the purpose of obtaining a higher output current. However, as a result of such combination of capacitor cells, the combined cells as a whole have an increased internal resistance and there are often cases where a low output current only can be obtained. Because of this, the internal resistance of the individual capacitor cells is desired to be reduced as much as possible. Inparticular, the resistance generating at the interface between the electrolytic liquid and activated-carbon electrode as components of each capacitor cell, the resistance generating at the interface between the activated-carbon electrode and the current collector, and the resistance possessed by the current collector itself are required to be reduced. Especially in electric double-layer capacitors employing an aqueous electrolytic liquid, the capacitor cells have a multilayer structure and to reduce the thickness-direction resistance of the current collector is necessary for reducing the resistance possessed by the current collector itself.

In electric double-layer capacitors employing an aqueous electrolytic liquid, an aqueous sulfuric acid solution of about 25-40% is in general use as the electrolytic liquid. Usually, these capacitors are used at a temperature of about 80°C or lower. In case where such an electric double-layer capacitor is used in an environment having a temperature exceeding, e.g., 80°C, the water in the electrolytic liquid is apt to permeate through the current collector and this is causative of a decrease in the electrical conductivity of the electrolytic liquid, an increase in the overall resistance of the capacitor cells, etc. There is hence a problem that the life of this electric double-layer capacitor is shortened.

In proton-ion polymer batteries also, the battery cells are required to be reduced in internal resistance as in the capacitor cells whose internal resistance is required to be reduced. In the batteries in which the battery cells have a multilayer structure, it is desired to reduce the thickness-direction resistance of the current collector as in the electric double-layer capacitors.

Furthermore, proton-ion polymer batteries also generally employ an aqueous sulfuric acid solution of about 25-40% as the electrolytic liquid like the electric double-layer capacitors. In an environment having a temperature as high as, e.g., above 80°C, the water in the electrolytic liquid is apt to permeate through the current collector and this is causative of a decrease in the electrical conductivity of the electrolytic liquid, an increase in the overall resistance of the battery cells, etc. There is hence a problem that the life of this proton-ion polymer battery is shortened.

With respect to the reduction of the thickness-direction resistance of a current collector, for example, a technique is being employed in which a conductive film having a reduced thickness is used as a current collector to thereby attain a reduction in electrical resistance. For example, patent document 1 describes a technique which comprises dispersing 100 parts by weight of a rubber ingredient and 5-100 parts by weight of conductive carbon in an organic solvent, casting the dispersion on a releasable film with a bar coater, and then drying the dispersion to thereby produce a thin conductive film. There is a statement therein to the effect that this film has a volume resistance as low as 0.1-5.0 Ωcm.

However, the current collector produced by the method described above has the following and other problems because it is a product shaped by casting:

(1) the film is apt to deform,
(2) the film is apt to develop holes (pin-holes),
(3) the solvent is apt to remain, and
(4) productivity is poor, although the thickness-direction electrical resistance of the film is low. Especially because of the problem that the film is apt to develop pin-holes, the film does not have sufficient water vapor barrier properties.

For improving water vapor barrier properties, a technique has hitherto been employed in which a rubber having a low moisture permeability, such as butyl rubber, is kneaded together with conductive carbon and the resultant mixture is formed into a sheet to thereby produce a current collector having a low moisture permeability. However, when it is attempted to incorporate the conductive material in a large amount into the rubber for the purpose of further reducing the thickness-direction resistance of the conductive sheet, then there is a drawback that molding is difficult because the resultant mixture generally has a higher melt viscosity than in the case of kneading a resin together with the conductive material. There also is a problem that the difficulty in molding tends to give sheets having an increased thickness and this increases rather than reduces the resistance.

EP 1 762 587 A1

Furthermore, there are cases where capacitor cells or battery cells suffer positional shifting at the current collector contact surfaces between the cells. A technique for preventing this shifting is known which comprises dispersing and mixing a styrene/ethylene/butylene/styrene copolymer resin (SEBS), a conductive material, and either a pressure-sensitive adhesive or a process oil with an organic solvent to produce a solution, applying this solution to a releasable base, drying the solution, and then peeling the resultant coating from the base to thereby produce a current collector film. It has been reported that the current collector film produced by such method can reduce the resistance of contact with the polarizable electrode or electrode plate of an electric double-layer capacitor (see, for example, patent document 2 or 3). However, even in such a conductive filmalso, water vapor is apt to permeate therethrough because of the addition of a pressure-sensitive adhesive or process oil and there has been a problem that the film is apt to develop pin-holes.

In patent document 4 is proposed a conductive composite sheet which is based on a combination of a conductive thermoplastic elastomer and a conductive rubber and which is thin and has self-tackiness. However, the tackiness of the conductive rubber are insufficient in tack strength and there has been a problem that when the conductive composite sheet is used as a current collector for an electric double-layer capacitor or proton polymer ion battery, positional shifting between cells is apt to occur, resulting in an increase in the internal resistance of the electric double-layer capacitor or proton polymer ion battery. In addition, use of carbon black alone as the conductive material poses a problem that the water vapor barrier effect is low because the primary-particle diameters of the carbon black are small.

Patent Document 1: WO 97/25738
Patent Document 2: JP-A-10-4033
Patent Document 3: JP-A-10-4034
Patent Document 4: JP-A-64-54607

Disclosure of the Invention

Problems that the Invention is to Solve

An object of the invention is to provide a thermoplastic-resin film and a thermoplastic-resin laminate film which have excellent conductivity and are further excellent in water vapor barrier properties and/or tackiness.

Means for Solving the Problems

The invention is based on the finding of a conductive thermoplastic-resin film and a thermoplastic-resin laminate film which are capable of eliminating the problems described above. Essential points of the invention are shown below.

(1) A conductive thermoplastic-resin film which comprises a mixture of a thermoplastic resin and a conductive material and has a volume resistivity, as measured by the four-probe method in accordance with JIS K-7194, of 10 $\Omega \cdot$cm or lower and a moisture permeability, as measured at a film thickness of 100 $\mu$m by JIS K-7129 method B in an atmosphere of 40°C and a relative humidity (RH) of 90%, of 10 g/(m$^2 \cdot$24 hr) or lower.

(2) The conductive thermoplastic-resin film according to the above (1), wherein the conductive material contained in the conductive thermoplastic-resin film A comprises: a graphite powder which has an average particle diameter of from 1 $\mu$m to 20 $\mu$m and in which particles having a particle diameter of 40 $\mu$m or smaller account for 80% by mass or more of the whole powder; and a carbon black powder.

(3) The conductive thermoplastic-resin film of claim 1 or 2,

wherein the volume filling factor A of the carbon black powder and the volume filling factor B of the graphite powder in the conductive material contained in the conductive thermoplastic-resin film A are in the ranges represented by the following expressions:

$$0 < A \leq 0.4 \times (1-B)$$

$$0 < B \leq 0.5$$

3

$$A + B = 1$$

(4) A conductive thermoplastic-resin film which comprises a mixture of a thermoplastic resin and a conductive material and has a volume resistivity, as measured by the four-probe method in accordance with JIS K-7194, of 10 $\Omega \cdot$cm or lower and a peel strength in the range of 1-150 N as measured at 25°C after disposing two sheets of the film (150 mm $\times$ 25 mm) so as to face each other and laminating the sheets to each other by pressing these in an atmosphere of 25°C at a pressure of $3.9 \times 10^5$ Pa for 1 minute.

(5) The conductive thermoplastic-resin film according to the above (4), wherein the conductive thermoplastic-resin film B contains an amorphous propylene/butene copolymer or an amorphous propylene/ethylene/butene copolymer in an amount in the range of 30-65% by mass.

(6) A conductive thermoplastic-resin laminate film which comprises: a conductive thermoplastic-resin film A, as a base, which comprises a mixture of a thermoplastic resin and a conductive material and having a volume resistivity, as measured by the four-probe method in accordance with JIS K-7194, of 10 $\Omega \cdot$cm or lower and a moisture permeability, as measured at a film thickness of 100 $\mu$m by JIS K-7129 method B in an atmosphere of 40°C and a relative humidity (RH) of 90%, of 10 g/(m$^2 \cdot$24 hr) or lower; and a conductive thermoplastic-resin film B having the following tackiness characteristics which has been laminated to at least one side of the film base:
Tackiness characteristics:
the peel strength as measured at 25°C after disposing two sheets of the film (150 mm $\times$ 25 mm) so as to face each other and laminating the sheets to each other by pressing these in an atmosphere of 25°C at a pressure of $3.9 \times 10^5$ Pa for 1 minute is in the range of 1-150 N.

(7) The conductive thermoplastic-resin film or conductive thermoplastic-resin laminate film according to any one of the above (1) to (6), characterized by being used as a current collector for an electric double-layer capacitor and as a current collector for a proton-ion polymer battery.

Advantages of the Invention

The conductive thermoplastic-resin film and conductive thermoplastic-resin laminate film of the invention have not only excellent electrical conductivity but excellent water vapor barrier properties and/or excellent tackiness. They are highly applicable especially to current collectors for electric double-layer capacitors and current collectors for proton-ion polymer batteries.

Brief Description of the Drawings

[Fig. 1] A diagrammatic view of an apparatus for measuring thickness-direction resistance.
[Fig. 2] A view showing the arrangement of conductive thermoplastic-resin films and wound-free paper in producing a peel strength measurement sample through pressing.
[Fig. 3] A view illustrating the sample fixed to tensile test jigs in peel strength evaluation.

Description of the Reference Numerals
1: electrode made of brass (with gold-plated surface)
2: sample (conductive sheet)
3: conductive thermoplastic-resin film
4: wood-free paper
5: jig (chuck) of tensile tester

Best Mode for Carrying Out the Invention

The invention will be explained below in detail.

The thermoplastic resin to be used in the conductive thermoplastic-resin film and conductive thermoplastic-resin laminate film of the invention is not particularly limited.

Examples thereof include polyolefin (PO) resins or polyolefin elastomers such as homopolymers or copolymers of monomers including ethylene, amorphous polyolefin resins (APO) such as cyclic polyolefins, polystyrene resins such as polystyrene (PS), ABS, SBS, and SIS or hydrogenated styrene-based elastomers such as SEBS, SEPS, and SEEPS, poly(vinyl chloride) (PVC) resins, poly(vinylidene chloride) (PVDC) resins, acrylic resins such as poly(methyl methacrylate) (PMMA) and acrylic copolymers, polyester resins such as poly(ethylene terephthalate) (PET), polyamide (PA) resins such as nylon-6, nylon-12, and copolymer nylons, poly(vinyl alcohol) resins such as poly(vinyl alcohol) (PVA) resins and ethylene/vinyl alcohol copolymers (EVOH), polyimide (PI) resins, polyetherimide (PEI) resins, polysulfone (PS) resins, polyethersulfone (PES) resins, poly(amide-imide) (PAI) resins, polyetheretherketone (PEEK) resins, polycarbonate (PC) resins, poly(vinyl butyral) (PVB) resins, polyarylate (PAR) resins, fluororesins or fluoroelastomers such as vinylidene fluoride/tetrafluoroethylene/hexafluoropropylene copolymers (THV), tetrafluoroethylene/hexafluoropropylene copolymers (FEP), vinylidene fluoride (PVDF), and vinyl fluoride (PVF), and (meth)acrylate resins.

Especially preferred of the resins enumerated above as examples are polyolefin (PO) resins, amorphous polyolefin resins (APO) such as cyclic polyolefins, hydrogenated styrene-based elastomers such as SEBS, SEPS, and SEEPS, polyolefin elastomers, fluororesins, or fluoroelastomers. These resins have relatively excellent water vapor barrier properties and excellent acid resistance. More preferred are PO resins, amorphous polyolefin resins (APO) such as cyclic polyolefins, polypropylene elastomers, and fluoroelastomers, because these resins are especially excellent in water vapor barrier properties and acid resistance.

It is also preferred to use a blend of those resins for the purpose of, e.g., imparting not only water vapor barrier properties and acid resistance but also mechanical properties and other performances required of the conductive thermoplastic-resin film.

Examples of the conductive material contained in the conductive thermoplastic-resin film of the invention include natural graphites, artificial graphite powders such as pyrolytic graphite and kish graphite, expanded graphites obtained by immersing those graphites in an acidic solution and then heating the graphites to expand these, carbon blacks such as Ketjen Black, acetylene black, and the carbon black produced by the furnace process, carbon fibers such as PAN-derived ones and pitch-derived ones, carbon nanofibers produced by the arc discharge method, laser deposition, vapor deposition, or the like, metal carbides such as tungsten carbide, silicon carbide, zirconium carbide, tantalum carbide, titanium carbide, niobium carbide, molybdenum carbide, and vanadium carbide, metal oxides such as titanium oxide, ruthenium oxide, and indium oxide, metal nitrides such as chromium nitride, aluminum nitride, molybdenum nitride, zirconium nitride, tantalum nitride, titanium nitride, gallium nitride, niobium nitride, vanadium nitride, and boron nitride, metal fibers such as iron fibers, copper fibers, and stainless-steel fibers, and metal powders such as a titanium powder, nickel powder, tin powder, tantalum powder, and niobium powder.

The conductive thermoplastic-resin film of the invention includes a conductive thermoplastic-resin film A which has excellent water vapor barrier properties besides conductivity (hereinafter referred to as "film A"). With respect to moisture permeability as a property among the water vapor barrier properties of this film, the moisture permeability of the film as measured at a film thickness of 100 $\mu$m by JIS K-7129 method B at 40°C and a relative humidity (RH) of 90% should be 10 g/ (m$^2$·24 hr) or lower. The moisture permeability thereof is preferably 5 g/ (m$^2$·24 hr) or lower, more preferably 3 g/(m$^2$·24 hr) or lower. The reasons for this are as follows.

In case where the moisture permeability of the film as measured at 40°C and 90% RH at a film thickness of 100 $\mu$m exceeds 10 g/(m$^2$·24 hr), use of this film as a current collector for an electric double-layer capacitor or as a current collector for a proton-ion polymer battery in a high-temperature atmosphere of at least about 80°C arouses the following troubles. The water in the electrolytic liquid is apt to permeate through the current collector and this is causative of a decrease in the electrical conductivity of the electrolytic liquid, an increase in the overall resistance of the battery cell, etc. As a result, the life of this proton-ion polymer battery is shortened.

With respect to volume resistivity as a property among the conductivity of film A, the volume resistivity thereof as determined in accordance with JIS K 7194 should be 10 $\Omega$cm or lower. The volume resistivity thereof is preferably 1 $\Omega$cm or lower, more preferably 0.8 $\Omega$cm or lower. The reason for this is as follows. In case where the volume resistivity of the film exceeds 10 $\Omega$cm, use of this film as a current collector for an electric double-layer capacitor or as a current collector for a proton-ion polymer battery is apt to result in an increase in the internal resistance of the electric double-layer capacitor or proton-ion polymer battery.

The conductive material to be contained in film A preferably comprises a graphite powder having the effect of imparting low water vapor permeability to the film. The conductive material preferably further includes a carbon black powder, such as, e.g., Ketjen Black, which can impart high conductivity even when added in a small amount to the resin.

It is also preferred that the graphite powder to be contained in film A should be one which has an average particle diameter of from 1 $\mu$m to 20 $\mu$m and in which the weight of particles having a particle diameter of 40 $\mu$m or smaller accounts for 80% or more of the weight of the whole powder.

For example, in the case where a carbon black and a graphite are mixed with a thermoplastic resin, the resultant film preferably is one in which the volume filling factor A of the carbon black powder and the volume filling factor B of the graphite powder are in the ranges represented by the following expressions. Thus, film A having a low moisture permeability and a low volume resistivity can be obtained.

$$0 < A \leq 0.4 \times (1-B)$$

$$0 < B \leq 0.5$$

$$A + B = 1$$

Incidentally, a graphite powder is one in which a hexagonal network structure has sufficiently grown in layer arrangement, such as, e.g., an artificial graphite, natural graphite, or expanded graphite. In examination by wide-angle X-ray diffractometry, a diffraction peak attributable to the (002) plane is observed as a sharp peak at an interplanar spacing $d_{002}$ of 0.335 nm. The graphite powder to be contained in film A of the invention preferably is one in which the peak is observed in a range where $d_{002}$ is 0.345 nm or shorter (lower limit is 0.335 nm), and especially preferably is one in which the peak is observed in a range where $d_{002}$ is 0.341 nm or shorter.

For producing film A, ordinary film production processes can be used. However, the process in which a solution prepared by dispersing and mixing a thermoplastic resin and a conductive material with an organic solvent is applied to a releasable base and dried and the resultant coating film is peeled from the base to produce the target film is undesirable because it has a problem that pin-holes are apt to be formed. It is preferred to use a method in which a thermoplastic resin is thermally melted to produce a film by extrusion molding, roll forming, or the like.

The conductive thermoplastic-resin film of the invention may comprise the film A as the only constituent element thereof. However, a low-electrical-resistance layer having lower electrical resistance than film A may be formed on at least one side of film A to constitute a laminate film. This laminate film is effective in considerably reducing contact resistance when in contact with other members.

Especially in the case where the conductive thermoplastic-resin film of the invention is used as a current collector for an electric double-layer capacitor or proton-ion polymer battery, the members to be in contact with the film are an electrode and the outer case (stainless steel, etc.). In this case, by regulating the low-electrical-resistance layer of the laminate film so as to have lower electrical resistance than film A, the resistance of contact with those members can be reduced. Thus, the internal resistance of the electric double-layer capacitor or proton-ion polymer battery can be reduced.

The volume resistivity of the low-electrical-resistance layer, as measured by the four-probe method in accordance with JIS K-7194, is desirably regulated to up to one-half, preferably up to one-fifth, the thickness-direction volume resistivity of film A. In case where the volume resistivity of the low-electrical-resistance layer exceeds one-half the volume resistivity of film A, the resistance of contact with the members in contact with this film A is apt to be high.

The conductive material to be contained in the low-electrical-resistance layer desirably is fine carbon fibers excellent in corrosion resistance and conductivity. The fiber diameters of the fine carbon fibers are desirably in the range of 0.0035-0.5 $\mu$m, preferably 0.08-0.2 $\mu$m. The fiber lengths thereof are desirably in the range of 0.1-100 $\mu$m, preferably 1-50 $\mu$m. Such carbon fibers have excellent conductivity.

Examples of the fine carbon fibers herein include the so-called carbon nanotubes and carbon nanofibers. Examples of the carbon nanotubes include the single type in which the carbon tube has a single-layer structure, the double type in which the tube has a double-layer structure, and the multi-type structure in which the tube has a structure composed of three or more layers. Examples thereof further include other forms such as the nanohorn type in which one end of the tube is closed and the other end is open and the cup type in which many carbon network layers of a bottomless cup shape have been superposed, with the ring edges of the carbon network layers exposed.

The proportions of a thermoplastic resin and fine carbon fibers in the low-electrical-resistance layer may be suitably determined so that the volume resistivity of the low-electrical-resistance layer is up to one-half the volume resistivity of film A. It is, however, preferred that the proportion of the thermoplastic resin to the fine carbon fibers be in the range of from 15/85 to 85/15 by volume.

The thickness of the low-electrical-resistance layer is desirably in the range of 1-50 $\mu$m, preferably 3-20 $\mu$m.

In case where the thickness of the low-electrical-resistance layer is smaller than 1 $\mu$m, the low-electrical-resistance layer is apt to develop pin-holes because of the small thickness and is apt to have areas having a higher volume resistivity. On the other hand, in case where the thickness of the low-electrical-resistance layer exceeds 50 $\mu$m, this is apt to pose a problem that the conductive resin film is brittle.

Methods for producing the low-electrical-resistance layer are not particularly limited. The layer may be produced, for example, by a process in which a solution prepared by dispersing and mixing a thermoplastic resin and a conductive material with an organic solvent is applied to a releasable base and dried and the resultant coating film is peeled from the base, or by a method in which a thermoplastic resin is thermally melted to form the target layer by extrusion molding, roll forming, or the like.

The conductive thermoplastic-resin film of the invention includes a conductive thermoplastic-resin film B which has excellent tackiness besides conductivity (hereinafter referred to as "film B"). The tackiness characteristics thereof should be in the range of 1-150 N in terms of peel strength as measured at 25°C after disposing two sheets of film B (150 mm $\times$ 25 mm) so as to face each other and laminating the sheets to each other by pressing these in an atmosphere of 25°C at a pressure of 3.9$\times$105 Pa for 1 minute. Preferably, the peel strength is in the range of 10-120 N. The reasons for that peel strength range are as follows. Peel strengths lower than 1 N are apt to pose a problem that when this film is used as a current collector for an electric double-layer capacitor or proton polymer ion battery, positional shifting between cells is apt to occur, resulting in an increase in the internal resistance of the electric double-layer capacitor or proton polymer ion capacitor. Peel strengths exceeding 150 N pose a problem that the film is difficult to handle because of the too high tackiness.

Film B can be regulated so as to have tackiness within that range by using an amorphous propylene/butene copolymer or an amorphous propylene/ethylene/butene copolymer in an amount in a specific range. The copolymer is added in an amount of 30-65% by weight, preferably 40-60% by weight, based on the conductive thermoplastic-resin film. In case where the content of the amorphous propylene/butene copolymer or amorphous propylene/ethylene/butene copolymer in the conductive thermoplastic-resin film is lower than 30% by weight, the conductive thermoplastic-resin film is less apt to have tackiness. In this case, an electric double-layer capacitor or proton-ion polymer battery is apt to suffer positional shifting at the current collector contact surfaces between the cells, and this is apt to pose problems, for example, that the resistance value is unstable. In case where the content of the amorphous propylene/butene copolymer or amorphous propylene/ethylene/butene copolymer in film B exceeds 65% by weight, this is apt to pose a problem that the film is difficult to handle because of the too high tackiness.

For the purpose of imparting tackiness to the conductive thermoplastic-resin film, an amorphous polyolefin resin (APO) such as a cyclic polyolefin or a tackifier of the rosin, hydrogenated rosin, hydrogenated rosin ester, terpene, hydrogenated terpene, terpene-phenol, petroleum resin, hydrogenated petroleum resin, styrene, or isoprene type or the likemay, for example, be added to the thermoplastic resin together with the propylene/butene copolymer or propylene/ethylene/butene copolymer. However, in case where an amorphous polyolefin resin (APO) such as a cyclic polyolefin or any of those tackifiers is added as the only ingredient for imparting tackiness to the conductive thermoplastic-resin film, this is apt to pose a problem that the film is considerably reduced in tackiness and elongation although high in strength or that the film is considerably reduced in mechanical strength although sufficient in tackiness and elongation. Use of an APO or tackifier as the only ingredient for imparting tackiness is hence undesirable.

Examples of the conductive material to be contained in film B include graphite powders such as natural graphites, pyrolytic graphite, and kish graphite, expanded graphites obtained by immersing those graphites in an acidic solution and then heating the graphites to expand these, carbon blacks such as Ketjen Black, acetylene black, and the carbon black produced by the furnace process, carbon fibers such as PAN-derived ones and pitch-derived ones, fine carbon fibers produced by the arc discharge method, laser deposition, vapor deposition, or the like, metal carbides such as tungsten carbide, silicon carbide, zirconium carbide, tantalum carbide, titanium carbide, niobium carbide, molybdenum carbide, and vanadium carbide, metal oxides such as titanium oxide, ruthenium oxide, and indium oxide, metal nitrides such as chromium nitride, aluminum nitride, molybdenum nitride, zirconium nitride, tantalum nitride, titanium nitride, gallium nitride, niobium nitride, vanadium nitride, and boron nitride, metal fibers such as iron fibers, copper fibers, and stainless-steel fibers, and metal powders such as a titanium powder, nickel powder, tin powder, tantalum powder, and niobium powder.

It is preferred to use carbon blacks such as Ketjen Black and fine carbon fibers among the conductive materials shown above because these carbon materials have especially excellent acid resistance and can impart conductivity even when added in a small amount.

The fiber diameters of the fine carbon fibers are desirably in the range of 0.0035-0.5 $\mu$m, preferably 0.08-0.2 $\mu$m. The fiber lengths thereof are desirably in the range of 0.1-100 $\mu$m, preferably 1-50 $\mu$m. Such carbon fibers have excellent conductivity. Examples of the fine carbon fibers are the same as those shown above in the explanation of the low-electrical-resistance layer.

With respect to the volume resistivity of film B of the invention, the volume resistivity thereof as determined in accordance with JIS K 7194 is desirably 10 $\Omega$cm or lower, preferably 5 $\Omega$cm or lower. The reason for this is as follows.

In case where the volume resistivity of the film exceeds 10 Ωcm, use of this film as a current collector for an electric double-layer capacitor or as a current collector for a proton-ion polymer battery is apt to result in an increase in the internal resistance of the electric double-layer capacitor or proton-ion polymer battery.

A preferred process for producing film B is a method in which a thermoplastic resin is thermally melted to produce a film by extrusion molding, roll forming, or the like. The process in which a solution prepared by dispersing and mixing a thermoplastic resin and a conductive material with an organic solvent is applied to a releasable base and dried and the resultant coating film is peeled from the base to produce the target film is undesirable because pin-holes are apt to be formed.

An embodiment of the invention is a conductive thermoplastic-resin laminate film which comprises the film A described above, which has excellent water vapor barrier properties, as a base and film B, which has tackiness, laminated to at least one side of the film base.

A preferred process for producing the laminate film is as follows.

First, film B is formed in the following manner. A liquid composition prepared by dissolving or dispersing a thermoplastic resin, a tackifier, and a conductive material in a solvent is applied to a smooth surface of a substrate and dried to form film B on the substrate. Subsequently, film A which has been formed beforehand is laminated with this film B preferably by the following method. The film B is disposed on at least one side of the film A so that the film A and film B face each other. The film A and film B are laminated by hot pressing or the like. Thereafter, the substrate is stripped off.

As the substrate can be used any of various known films. Examples thereof include films of polyesters, polycarbonates, triacetyl cellulose, cellophane, polyamides, aromatic polyamides, polyimides, polyetherimides, poly(phenylene sulfide) s, polysulfones, polyethersulfones, and polypropylene. Surfaces of these films may be treated with a silicone or the like for imparting releasability according to need. Of such films, polypropylene films and polyester films which have undergone a releasability-imparting treatment with a silicone are preferred from the standpoints of ease of stripping, etc. The thickness of the substrate is in the range of 5-500 $\mu$m, preferably 10-300 $\mu$m. In case where the thickness thereof is smaller than 5 $\mu$m, this substrate cannot have sufficient strength required of base films and is apt to rumple. Thicknesses thereof exceeding 500 $\mu$m pose a problem that this film is so stiff that it is difficult to handle and has poor workability.

The conductive thermoplastic-resin film and conductive thermoplastic-resin laminate film of the invention are usable in the following applications. When the films are used as members of electricity storage devices, power generators, or the like, the films can reduce the internal resistance of these because of the excellent conductivity of the films. Furthermore, since the films are excellent also in water vapor barrier properties, they can be used as the current collector of an electric double-layer capacitor or proton-ion polymer battery which employs an aqueous electrolytic liquid.

Examples

The invention will be explained below by reference to Examples, but the invention should not be construed as being limited to the following Examples.

(EXAMPLES 1 TO 4)

<Production of Films A>

Conductive thermoplastic-resin films (films A) were produced by mixing a thermoplastic resin with a conductive material in each of the proportions shown in Table 1 by means of a twin-screw extruder (extruder temperature, 230°C) and then extruding the resultant mixture through the die orifice of a single-screw extruder (extruder temperature, 230°C). The films A obtained each had a thickness of 100 $\mu$m. The volume resistivity, thickness-direction resistance, and moisture permeability of each film are shown in Table 1. The thermoplastic resin and conductive material shown in Table 1 are as follows.

1. Polyolefin elastomer
"M142E" manufactured by Idemitsu Kosan Co., Ltd.; specific gravity, 0.88
2. Carbon black
"Ketjen Black EC600JD" manufactured by Lion Corp.; specific gravity, 1.5
3. Graphite (artificial graphite powder)
"UFG-30" manufactured by Showa Denko K.K.; specific gravity, 2.2

(EXAMPLE 5)

<Production of Low-Electrical-Resistance Layer>

A styrene-based elastomer SEBS ("Tuftec H1041" manufactured by Asahi Chemical Industry Co., Ltd.; specific gravity, 0.91) and fine carbon fibers ("Vapor-Phase-Process Carbon Fiber VGCF" manufactured by Showa Denko K.K.; specific gravity, 2) were dispersed in a volume ratio of 80/20 in THF (tetrahydrofuran) so as to result in a solid concentration of 8% by weight. Thus, a dispersion was prepared.
The fine carbon fibers used had a fiber diameter of 150 nm, fiber length of 10-20 $\mu$m, bulk specific gravity of 0.035 g/cm$^3$, and true specific gravity of 2.0 g/cm$^3$.
This dispersion was applied to a base film (polypropylene film; thickness, 50 $\mu$m) with a bar coater ("#28" manufactured by Matsuo Sangyo Co., Ltd.) and dried at 80°C to obtain a base film/low-electrical-resistance layer composite material. The low-electrical-resistance layer was peeled from the base film/low-electrical-resistance layer composite material obtained. This low-electrical-resistance layer was examined for thickness and volume resistivity. As a result, the thickness of the low-electrical-resistance layer was found to be 3 $\mu$m. Performances of the film are shown in Table 2.

(EXAMPLES 6 TO 9 AND COMPARATIVE EXAMPLES 3 AND 4)

<Production of Conductive Thermoplastic-Resin Laminate Films>

The films A obtained in Examples 1 to 4 and Comparative Examples 1 and 2 and the low-electrical-resistance layer film obtained in Example 5 were used in the following combinations. With respect to each combination, the films were disposed in the order of low-electrical-resistance layer/film A/low-electrical-resistance layer and united by means of a hot press to produce a conductive thermoplastic-resin laminate film.
The conditions for the hot pressing included a heating temperature of 140°C, pressure of 4.9×106 Pa (50 kgf/cm$^2$), and pressing time of 5 minutes.
Example 6: Film A obtained in Example 1/low-electrical-resistnace layer film obtained in Example 5.
Example 7 : Film A obtained in Example 2/low-electrical-resistnace layer film obtained in Example 5.
Example 8: Film A obtained in Example 3/low-electrical-resistnace layer film obtained in Example 5.
Example 9: Film A obtained in Example 4/low-electrical-resistnace layer film obtained in Example 5.
Comparative Example 3: Conductive water vapor barrier layer film obtained in Comparative Example 1/low-electrical resistance layer film obtained in Example 5.
Comparative Example 4: Film A obtained in Comparative Example 2/low-electrical-resistnace layer film obtained in Example 5.
The conductive thermoplastic-resin laminate films obtained each had a thickness of 105 $\mu$m. Performances of the films are shown in Table 3.

Method of Measuring Moisture Permeability (Water Vapor Permeability)

Moisture permeability in the invention was measured by JIS K-7129 method B at 40°C and 90% RH using PERMATRAN W 3/31 (manufactured by MOCON Inc., USA). The unit is g/(m$^2$·24)hr.

(Measurement of Volume Resistivity)

Volume resistivity in the invention was measured in accordance with JIS K 7194 under the following conditions: The unit is $\Omega$cm.

1. Measuring Apparatus
Loresta HP (manufactured by Mitsubishi Chemical Corp.)
2. Measuring Method
Four-terminal four-probe method (ASP type probes)
3. Current Applied for Measurement
100 mA

(Measurement of Film-Thickness-Direction Resistance)

The thickness-direction resistance of the low-electrical-resistance layer and that of each film A were evaluated by the following method.

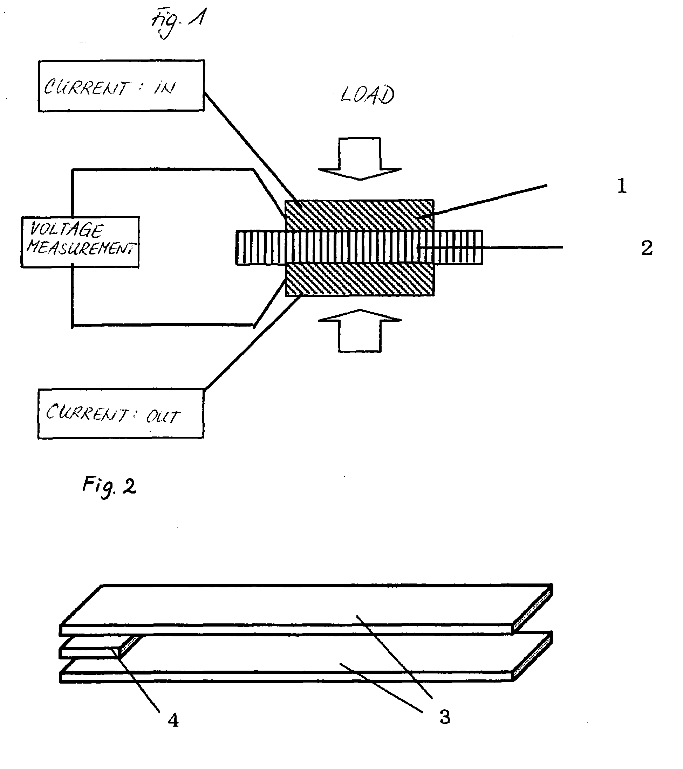

    1. Measuring Apparatus
Resistance meter: Type YMR-3 (manufactured by Yamasaki-Seiki Co., Ltd.)
Loading device: Type YSR-8 (manufactured by Yamasaki-Seiki Co., Ltd.)
Electrodes: two flat plates made of brass (area, 6.45 cm$^2$; mirror finish; gold-plated surface)
2. Measurement Conditions
Method: four-terminal method
Applied current: 10 mA (alternating current; 287 Hz)
Open-terminal voltage: 20 mV peak or lower
Load: 1.8 MPa (18.6 kgf/cm$^2$)
3. Measuring Method
Measurement was made with the measuring apparatus shown in Fig. 1.

[Table 1]

| | Polyolefin elastomer | Graphite | Carbon black | Volume resistivity (four-probe method) | Thickness-direction resistance | Moisture permeability |
|---|---|---|---|---|---|---|
| | vol% | vol% | vol% | Ωcm | mΩ | g/(m$^2$·24 hr) |
| Ex. 1 | 80 | 10 | 10 | 0.32 | 4.4 | 2.31 |
| Ex. 2 | 72 | 20 | 8 | 0.35 | 4.7 | 1.46 |
| Ex. 3 | 64 | 30 | 6 | .36 | 7 | 1.24 |
| Ex. 4 | 56 | 40 | 4 | 0.28 | 7.2 | 1.06 |
| Comp. Ex. 1 | 88 | 0 | 12 | 0.85 | 10 | 4.8 |
| Comp. Ex. 2 | 60 | 40 | 0 | 160 | 250 | 1 |

Table 1 shows Examples and Comparative Examples. As shown under Examples 1 to 4, the films made of the polyolefin elastomer containing graphite and carbon black have a moisture permeability of 1.06-2.31 g/m$^2$/24 hr and a volume resistivity of 0.28-0.36 Ωcm. These films each are the conductive thermoplastic-resin film of the invention which has a moisture permeability of 3 g/m$^2$/24 hr or lower and a volume resistivity of 0.5 Ωcm or lower. The values of thickness-direction resistance of these films are as low as 4.4-7.2 Ωcm, showing that these films have excellent electrical properties. In contrast, the film made of the polyolefin elastomer containing carbon black only, as shown under Comparative Example 1, has a moisture permeability as high as 4.80 g/m$^2$/24 hr and a volume resistivity as high as 0.85 Ωcm and, hence, has a thickness-direction resistance as high as 10.0 mΩ. This film is inferior to the films of the Examples.
Furthermore, the film made of the polyolefin elastomer containing graphite only, as shown under Comparative Example 2, has a volume resistivity as exceedingly high as 160 Ωcm, although the moisture permeability thereof is as low as 1.00 g/m$^2$/24 hr. Consequently, this film has a thickness-direction resistance as high as 250 mΩ and lacks suitability for practical use.

[Table 2]

| | Styrene-based elastomer | Fine carbon fibers | Volume resistivity (four-probe method) | Thickness-direction resistance | Moisture permeability |
|---|---|---|---|---|---|
| | vol% | vol% | Ωcm | mΩ | g/(m$^2$·24 hr) |
| Ex. 5 | 80 | 20 | 0.1 | 0.2 | ≥100 |

Moreover, the low-electrical-resistance layer having a volume resistivity of 0.10 Ωcm, which is shown in Table 2 under Example 5, has a moisture permeability of 100 g/m$^2$/24 hr or higher. However, by laminating this layer to both sides of each of the films of Examples 1 to 4, conductive thermoplastic-resin films having the same moisture permeabilities as in Examples 1 to 4 in Table 1 and having thickness-direction resistances as exceedingly low as 1.1-2.0 mΩ can be obtained as shown in Table 3 under Examples 6 to 9.

[Table 3]

|  | Thickness-direction resistance mΩ | Moisture permeability g/(m$^2$·24 hr) |
|---|---|---|
| Example 6 | 1.1 | 2.31 |
| Example 7 | 1.5 | 1.45 |
| Example 8 | 1.6 | 1.25 |
| Example 9 | 1.7 | 1.05 |
| Comparative Example 3 | 2.0 | 4.8 |
| Comparative Example 4 | 150 | 1.0 |

In contrast, in Comparative Example 3 in Table 3, the moisture permeability is high although the thickness-direction resistance is low. In Comparative Example 4, the thickness-direction resistance is high although the moisture permeability is low. These laminate films lack suitability for practical use.

(EXAMPLES 10 TO 15 AND COMPARATIVE EXAMPLE 5 AND 7)

<Production of Films B>

Conductive thermoplastic-resin films (films B) were produced by mixing a thermoplastic resin with a carbon black in each of the proportions shown in Table 4 by means of a twin-screw extruder (extruder temperature, 230°C) and then extruding the resultant mixture through the die orifice of a single-screw extruder (extrude temperature, 230°C). The films B obtained each had a thickness of 50 μm. The volume resistivity, moisture permeability, and peel strength of each film are shown in Table 4. The thermoplastic resin and conductive material shown in Table 4 are as follows.

    1. Blend of polypropylene and propylene-ethylene-butene copolymer
    "T3714" manufactured by Sumitomo Chemical Co., Ltd.; specific gravity, 0.86
    (Polypropylene/propylene-ethylene-butene copolymer = 15/85 wt%)
    2. Polyolefin elastomer
    "M142E" manufactured by Idemitsu Kosan Co., Ltd.; specific gravity, 0.88
    3. Carbon black
    "Ketjen Black EC600JD" manufactured by Lion Corp.; specific gravity, 1.5

(COMPARATIVE EXAMPLE 6)

A styrene-based elastomer SEBS ("Tuftec H1221" manufactured by Asahi Chemical Industry Co., Ltd.; specific gravity, 0.91) and a carbon black ("Ketjen Black EC600JD" manufactured by Lion Corp.; specific gravity, 1.5) were dissolved or dispersed in the proportion shown in Table 4 in cyclohexane so as to result in a solid concentration of 20% by weight.
Thus, a dispersion was produced.
This dispersion was applied to a base film (polypropylene film which had undergone releasability-imparting treatment; thickness, 50 μm) with a bar coater (#80, manufactured by Matsuo Sangyo Co., Ltd.) and dried at 80°C to produce a composite film composed of the base film and a conductive film.
The conductive film was peeled from the composite film obtained. The conductive film thus obtained had a thickness of 50 μm. The volume resistivity, moisture permeability, and peel strength of this conductive film are shown in Table 4.
The method used for measuring volume resistivity and the method used for measuring moisture permeability are the same as those described hereinabove.

(Preparation of Peel Strength Measurement Sample)

A sample for peel strength evaluation in the invention was produced by the following method. Two sheets of a conductive thermoplastic-resin film which had been formed by extrusion and had dimensions of 150 mm × 25 mm and a thickness of 50 μm were disposed so as to face each other and laminated to each other by applying a pressure of $3.9 \times 10^5$ Pa thereto for 1 minute in an atmosphere of 25°C. For the purpose of securing the holding allowance necessary for holding with the chucks of a tensile tester in the peel strength measurement to be conducted later, the laminating was conducted after wood-free paper having dimensions of 10 mm × 25 mm and a thickness of 80 μm was inserted and disposed between the two sheets of the conductive thermoplastic-resin film so as to true up edges of the paper and conductive thermoplastic-resin film sheets at one end, as shown in Fig. 2.

(Method of Measuring Peel Strength)

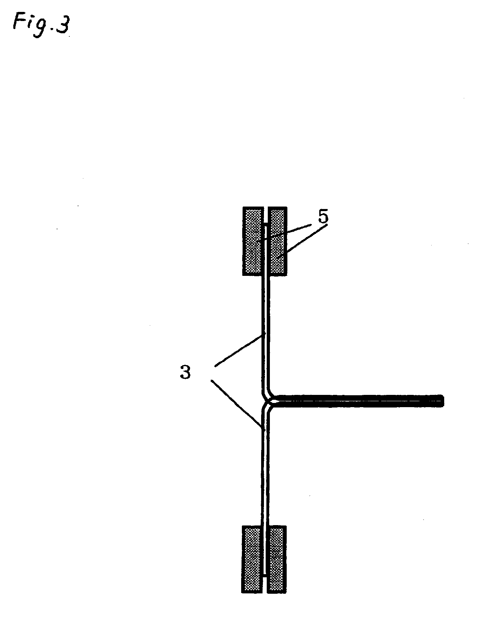

IM-20ST (manufactured by Intesco Co., Ltd.) was used to conduct a peel test at 25°C and a pulling rate of 20 mm/min in the manner shown in Fig. 3. Peel strength was evaluated according to the calculation method as provided for in JIS K 6854. The unit is N.

(Peeling Mode)

The case in which the conductive thermoplastic-resin films themselves suffered no breakage and could be separated at the interface between these in the peel test is referred to as "interfacial separation". The case in which either of the films themselves broke in the peel test before peeling completion because of considerably low film strength, too high film tackiness, etc. is referred to as "base breakage".

Table 4 shows Examples and Comparative Examples. Examples 10 to 15 are conductive films (thickness, 50 μm) produced by adding carbon black in a proportion of 12 vol% to a blend of PP, a propylene-ethylene-butene copolymer, and a polyolefin elastomer and forming the resultant composition into film by the same extrusion molding method as described above. These conductive films have a volume resistivity of 10 Ωcm or lower, moisture permeability of 20 g/m2/24 hr or lower, and peel strength in the range of 1-150 N. These films each are the conductive thermoplastic-resin film (film B) of the invention which combines a low resistance, low moisture permeability, and moderate peel strength.

In contrast, in Comparative Example 5, the peel strength is higher than 150 N and the peeling mode is base separation because the content of the amorphous propylene-ethylene-butene copolymer is higher than 65% by weight, although the volume resistivity and the moisture permeability are 10 Ωcm or lower and 20 g/m2/24 hr or lower, respectively. It can hence be seen that the tackiness is too high.

[Table 4]

| | PP/ propylene-ethylene-butene copolymer vol% | Polyolefin elastomer vol% | Styrene-based elastomer vol% | Carbon black vol% | Content of amorphous propylene-ethylene-butene copolymer wt% | Volume resistivity (four probe method) $\Omega$cm | Moisture permeability g/(m$^2\cdot$ 24 hr) | Peel strength N | Peeling mode |
|---|---|---|---|---|---|---|---|---|---|
| Ex.10 | 83 | 5 | 0 | 12 | 64.7 | 1.6 | 11.4 | 120 | interfacial separation |
| Ex.11 | 79 | 9 | 0 | 12 | 61.5 | 1.4 | 11.1 | 70 | interfacial separation |
| Ex.12 | 75 | 13 | 0 | 12 | 58.4 | 1.2 | 10.5 | 60 | interfacial separation |
| Ex.13 | 70 | 18 | 0 | 12 | 54.4 | 1 | 10 | 39 | interfacial separation |
| Ex.14 | 62 | 26 | 0 | 12 | 48.1 | 1 | 9.5 | 27 | interfacial separation |
| Ex.15 | 53 | 35 | 0 | 12 | 41.1 | 0.9 | 9 | 20 | interfacial separation |
| Comp. Ex.5 | 88 | 0 | 0 | 12 | 68.7 | 1.7 | 12 | 160 | base breakage |
| Comp. Ex.6 | 0 | 0 | 88 | 12 | 0 | 0.9 | 32 | 0.8 | base breakage |
| Comp. Ex.7 | 0 | 88 | 0 | 12 | 0 | 0.9 | 8.6 | 0 | interfacial separation |

Furthermore, the thin conductive film obtained by adding carbon black in a proportion of 12 vol% to a styrene-based elastomer, casting the resultant composition on a releasable film with a bar coater, and drying the coating, as in Comparative Example 6, had a volume resistivity of 0.9 $\Omega$cm, which was lower than in Example 10. However, this film had a moisture permeability as high as 32.0 g/m$^2$/24 hr and a peel strength as low as 0.8 N/m. In addition, the film strength thereof was exceedingly low.

Moreover, as shown in Comparative Example 7, the conductive film produced by adding carbon black in a proportion of 12 vol% to a polyolefin elastomer and forming the resultant composition into film by the same method as in Example 10 has a volume resistivity of 0. 9 $\Omega$cm and a moisture permeability of 8. 6 g/m$^2$/24 hr. Although this conductive film has a lower resistance and a lower moisture permeability than in Example 10, it has a peel strength of 0 N/m and is inferior to the conductive film of the Example.

(EXAMPLES 16 TO 21 AND COMPARATIVE EXAMPLES 8 TO 10)

<Production of Conductive Thermoplastic-Resin Laminate Films by Laminating Film B Having Tackiness to at least One Side of Film A as Base>

(Production of Film A)

A thermoplastic resin and a conductive material were mixed together in each of the proportions shown in Table 5 under Barrier Layers 1 to 7 by means of a twin-screw extruder (extruder temperature, 230°C).
The mixture prepared was extruded through the die orifice of a single-screw extruder (extruder temperature, 230°C). Thus, films A described under Barrier Layers were produced.
The films A obtained each had a thickness of 100 $\mu$m. The volume resistivity and water vapor permeability of each film are shown in Table 5 under Barrier Layers 1 to 7.
The thermoplastic resin and conductive material shown in Table 5 are as follows.

    1. Polyolefin elastomer
M142E, manufactured by "Idemitsu Kosan Co., Ltd."; specific gravity, 0.88
2. Styrene-based elastomer
Sept on 2002, manufactured by "Kuraray Co., Ltd."; specific gravity, 0.91
3. Carbon black
Ketjen Black EC600JD, manufactured by "Lion Corp."; specific gravity, 1.5

    · Artificial graphite powder
UFG-30, manufactured by "Showa Denko K.K."; specific gravity, 2.2
· Carbon nanofibers
VGCF, manufactured by "Showa Denko K. K."; specific gravity, 2

(Production of Film B)

An SEPS (Septon 2063, manufactured by "Kuraray Co., Ltd."; specific gravity, 0.88), a carbon black (Ketjen Black EC600JD, manufactured by "Lion Corp."; specific gravity, 1.5), and a tackifier (Arkon P-100, manufactured by "Arakawa Chemical Industry, Ltd."; specific gravity, 0.9) were dispersed in cyclohexane in such amounts that the proportions of the Arkon P-100 and the carbon black were 150 parts by weight and 17 parts by weight, respectively, per 100 parts by weight of the SEPS and that the resultant solid concentration became 15% by weight. Thus, a dispersion was produced.
This dispersion was applied to a base film (polypropylene film which had undergone releasability-imparting treatment; thickness, 50 $\mu$m) with a bar coater (#24, "manufactured by Matsuo Sangyo Co., Ltd.") and dried at 80°C. Thus, a base film/conductive tacky layer 1 composite material was obtained.
The conductive tacky layer 1 was peeled from the base film/conductive tacky layer 1 composite material obtained. This conductive tacky layer 1 was examined for thickness and volume resistivity. As a result, the thickness of the conductive tacky layer 1 was found to be 5 $\mu$m. The volume resistivity of the film is shown in Table 5 under Tacky Layers 1 and 2.
[Table 5]

| | Resin ingredient and proportion | Conductive material ingredient and proportion | Tackifier | Thickness | Volume resistivity | Moisture permeability |
|---|---|---|---|---|---|---|
| | | | | μm | Ωcm | g/m²/24 hr |
| Barrier Layer 1 | polyolefin elastomer 88 vol% | carbon black 12 vol% | 0 | 100 | 1.1 | 3.3 |
| Barrier Layer 2 | styrene-based elastomer 88 vol% | carbon black 12 vol% | 0 | 100 | 1.5 | 4.2 |
| Barrier Layer 3 | polyolefin elastomer 50 vol% | artificial graphite powder 50 vol% | 0 | 100 | 1.6 | 1.2 |
| Barrier Layer 4 | styrene-based elastomer 50 vol% | artificial graphite powder 50 vol% | 0 | 100 | 2.4 | 1.6 |
| Barrier Layer 5 | polyolefin elastomer 75 vol% | carbon nanofibers 25 vol% | 0 | 100 | 0.5 | 3.0 |
| Barrier Layer 6 | styrene-based elastomer 75 vol% | carbon nanofibers 25 vol% | 0 | 100 | 0.7 | 3.8 |
| Barrier Layer 7 | Polyolefin elastomer 95 vol% | carbon black 5 vol% | 0 | 100 | 15 | 5.1 |
| Tacky Layer 1 | styrene-based elastomer (SEPS) 100 parts by weight | carbon black 17 parts by weight | Arkon P-100 150 parts by weight | 5 | 120 | ≥100 (unable to be measured) |
| Tacky Layer 2 | ditto | ditto | ditto | 100 | 85 | 32 |

(EXAMPLES 16 TO 21 AND COMPARATIVE EXAMPLES 8 TO 10)

The films A shown in Table 5 under Barrier Layers 1 to 6 and the film B which was the tacky layer 1 shown in Table 5 were used in the combinations shown in Table 6 under Examples 16 to 21. With respect to each combination, the films were disposed in the order of base film/film B/film A and united by means of a hot press. The base film was stripped off. Thus, the conductive thermoplastic-resin laminate films shown in Table 6 under Examples 16 to 21 were produced.
The conditions for the hot pressing included a heating temperature of 80°C and a pressure of $4.9 \times 10^6$ Pa (50 kgf/cm²). The conductive thermoplastic-resin laminate films obtained each had a thickness in the range of 103-105 μm. The volume resistivities as measured from the film B side and the peel strengths as measured after two sheets of each conductive thermoplastic-resin film were disposed so that the films B faced each other are shown in Table 6 under Examples 16 to 21.

(COMPARATIVE EXAMPLE 8)

The film A which was the barrier layer 7 shown in Table 5 was united with the film B which was the tacky layer 1 shown in Table 5, in the same manner as in Example 16. Thus, the conductive thermoplastic-resin laminate film shown in Table 6 under Comparative Example 8 was produced.
The conductive thermoplastic-resin laminate film obtained had a thickness of 105 $\mu$m. The volume resistivity as measured from the film B side and the peel strength as measured after two sheets of the conductive thermoplastic-resin laminate film were disposed so that the films B faced each other are shown in Table 6 under Comparative Example 8.

(COMPARATIVE EXAMPLE 9)

The film A having a thickness of 100 $\mu$m which was the barrier layer 1 shown in Table 5 was examined as the single-layer state for volume resistivity. Furthermore, the film A was examined for peel strength after two sheets of the film A were disposed so as to face each other. The results thereof are shown in Table 6 under Comparative Example 9.

(COMPARATIVE EXAMPLE 10)

The film B having a thickness of 100 $\mu$m which was the tacky layer 2 shown in Table 5 was examined as the single-layer state for volume resistivity. Furthermore, the film B was examined for peel strength after two sheets of the film B were disposed so as to face each other. The results thereof are shown in Table 6 under Comparative Example 10.
The method used for measuring volume resistivity, method used for measuring moisture permeability, and method for measuring peel strength are the same as those described hereinabove.
[Table 6]

| | Film A | Film B | Volume resistivity Ωcm | Moisture permeability g/m$^2$/24 hr | Peel strength N |
|---|---|---|---|---|---|
| Ex. 16 | barrier layer 1 | tacky layer 1 | 1.2 | 3.1 | 5 |
| Ex. 17 | barrier layer 2 | ditto | 2.2 | 4.2 | 10 |
| Ex. 18 | barrier layer 3 | ditto | 2.3 | 1.1 | 2 |
| Ex. 19 | barrier layer 4 | ditto | 3.5 | 1.5 | 7 |
| Ex. 20 | barrier layer 5 | ditto | 1.2 | 2.7 | 15 |
| Ex. 21 | barrier layer 6 | ditto | 1.8 | 3.5 | 23 |
| Comp. Ex. 8 | barrier layer 7 | ditto | 17 | 4.9 | 4 |
| Comp. Ex. 9 | barrier layer 1 | none | 1.1 | 3.3 | ≤0.01 |
| Comp. Ex. 10 | none | tacky layer 2 | 85 | 32 | unable to be measured because of breakage of tacky layer 2 |

As shown in Table 6 under Examples 16 to 20, the conductive thermoplastic-resin laminate films according to the invention have a volume resistivity of 0.6-2.6 Ωcm, i.e., 10 Ωcm or lower, and further have excellent water vapor barrier properties, i.e., 1.1-4.2 g/m$^2$/24 hr, and an excellent peel strength, i.e., 2-19 N.
In contrast, the conductive thermoplastic-resin laminate film shown in Table 6 under Comparative Example 8 has a volume resistivity as high as 17 Ωcm and is inferior to those of the Examples.
The film A alone shown under Comparative Example 9 has a peel strength as low as 0.01 N, although excellent in water vapor barrier properties (moisture permeability) and volume resistivity. This film is apt to cause positional shifting between capacitor cells.
Furthermore, it can be seen that the film B alone shown under Comparative Example 10 has a moisture permeability as exceedingly high as 32 g/m$^2$/24 hr although excellent in tackiness.
While the invention has been described in detail and with reference to specific embodiments thereof, it will be apparent to one skilled in the art that various changes and modifications can be made therein without departing from the spirit and scope thereof.

This application is based on a Japanese patent application filed on November 18, 2003 (Application No. 2003-387680), a Japanese patent application filed on March 24, 2004 (Application No. 2004-86809), and a Japanese patent application filed on March 29, 2004 (Application No. 2004-95040), the entire contents thereof being herein incorporated by reference.

Industrial Applicability

The invention can provide a conductive thermoplastic-resin film and a conductive thermoplastic-resin laminate film which have excellent conductivity and excellent water vapor barrier properties and/or tackiness and are highly suitable for use as a current collector for electric double-layer capacitors or a current collector for proton-ion polymer batteries.

**Claims**

1. A conductive thermoplastic-resin film which comprises a mixture of a thermoplastic resin and a conductive material and has a volume resistivity, as measured by the four-probe method in accordance with JIS K-7194, of 10 $\Omega$·cm or lower and a moisture permeability, as measured at a film thickness of 100 $\mu$m by JIS K-7129 method B in an atmosphere of 40°C and a relative humidity (RH) of 90%, of 10 g/(m$^2$·24 hr) or lower.

2. The conductive thermoplastic-resin film according to claim 1, wherein the conductive material contained in the conductive thermoplastic-resin film A comprises: a graphite powder which has an average particle diameter of from 1 $\mu$m to 20 $\mu$m and in which particles having a particle diameter of 40 $\mu$m or smaller account for 80% by mass or more of the whole powder; and a carbon black powder.

3. The conductive thermoplastic-resin film according to claim 1 or 2, wherein the volume filling factor A of the carbon black powder and the volume filling factor B of the graphite powder in the conductive material contained in the conductive thermoplastic-resin film A are in the ranges represented by the following expressions:

$$0 < A \le 0.4 \times (1-B)$$

$$0 < B \le 0.5$$

$$A + B = 1$$

4. A conductive thermoplastic-resin film which comprises a mixture of a thermoplastic resin and a conductive material and has a volume resistivity, as measured by the four-probe method in accordance with JIS K-7194, of 10 $\Omega$·cm or lower and a peel strength in the range of 1-150 N as measured at 25°C after disposing two sheets of the film (150 mm $\times$ 25 mm) so as to face each other and laminating the sheets to each other by pressing these in an atmosphere of 25°C at a pressure of $3.9 \times 10^5$ Pa for 1 minute.

5. The conductive thermoplastic-resin film according to claim 4, wherein that the conductive thermoplastic-resin film B contains an amorphous propylene/butene copolymer or an amorphous propylene/ethylene/butene copolymer in an amount in the range of 30-65% by mass.

6. A conductive thermoplastic-resin laminate film which comprises: a conductive thermoplastic-resin film A, as a base, which comprises a mixture of a thermoplastic resin and a conductive material and having a volume resistivity, as measured by the four-probe method in accordance with JIS K-7194, of 10 $\Omega$·cm or lower and a moisture permeability, as measured at a film thickness of 100 $\mu$m by JIS K-7129 method B in an atmosphere of 40°C and a relative humidity (RH) of 90%, of 10 g/(m$^2$·24 hr) or lower; and a conductive thermoplastic-resin film B having the following tackiness characteristics which has been laminated to at least one side of the film base:

Tackiness characteristics:
the peel strength as measured at 25°C after disposing two sheets of the film (150 mm $\times$ 25 mm) so as to face each other and laminating the sheets to each other by pressing these in an atmosphere of 25°C at a pressure of $3.9 \times 10^5$ Pa for 1 minute is in the range of 1-150 N.

7. The conductive thermoplastic-resin film or conductive thermoplastic-resin laminate film according to any one of claims 1 to 6, **characterized by** being used as a current collector for an electric double-layer capacitor and as a current collector for a proton-ion polymer battery.

Fig. 1

Fig. 2

Fig.3

**INTERNATIONAL SEARCH REPORT**

| International application No. |
| --- |
| PCT/JP2005/005429 |

A. CLASSIFICATION OF SUBJECT MATTER
Int.Cl[7] C08J5/18, B32B27/18, C08K3/00, 3/04, 7/06, C08L101/00,
       H01B1/24, 5/16, H01G9/016, H01M4/66//C08L101:00

According to International Patent Classification (IPC) or to both national classification and IPC

B. FIELDS SEARCHED

Minimum documentation searched (classification system followed by classification symbols)
Int.Cl[7] C08J5/18, B32B27/18, C08K3/00, 3/04, 7/06, C08L101/00,
       H01B1/24, 5/16, H01G9/016, H01M4/66

Documentation searched other than minimum documentation to the extent that such documents are included in the fields searched
Jitsuyo Shinan Koho          1922–1996     Jitsuyo Shinan Toroku Koho     1996–2005
Kokai Jitsuyo Shinan Koho    1971–2005     Toroku Jitsuyo Shinan Koho     1994–2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2002-008665 A  (Toray Industries, Inc.),<br>11 January, 2002 (11.01.02),<br>Claims; pages 2 to 3, Par. No. [0010]; page 3,<br>Par. No. [0013]; page 5, table 1, example 4<br>(Family: none) | 1,7<br>2-6 |
| X<br>Y | JP 2002-124265 A  (Toray Industries, Inc.),<br>26 April, 2002 (26.04.02),<br>Claims; page 3, Par. No. [0012]; page 5,<br>Par. No. [0036]<br>(Family: none) | 1,7<br>2-6 |
| Y | JP 11-283628 A  (Fuji Photo Film Co., Ltd.),<br>15 October, 1999 (15.10.99),<br>Claims; pages 6 to 7, Par. Nos. [0034] to<br>[0036]; page 12, Par. No. [0074]<br>(Family: none) | 2,3 |

| [X] Further documents are listed in the continuation of Box C. | [ ] See patent family annex. |
| --- | --- |

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>16 May, 2005 (16.05.05) | Date of mailing of the international search report<br>31 May, 2005 (31.05.05) |
| --- | --- |
| Name and mailing address of the ISA/<br>Japanese Patent Office | Authorized officer |
| Facsimile No. | Telephone No. |

Form PCT/ISA/210 (second sheet) (January 2004)

**INTERNATIONAL SEARCH REPORT**

| | International application No. |
|---|---|
| | PCT/JP2005/005429 |

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2003-133179 A  (Nippon Zeon Co., Ltd.), 09 May, 2003 (09.05.03), Claims; pages 3 to 4; Par. No. [0017] (Family: none) | 4,6 |
| Y | JP 2004-022504 A  (Samsung SDI Kabushiki Kaisha), 22 January, 2004 (22.01.04), Claims; page 5, Par. No. [0022] & US 2004/0041536 A1    & KR 2003097573 A | 4,6 |

Form PCT/ISA/210 (continuation of second sheet) (January 2004)

# INTERNATIONAL SEARCH REPORT

| | International application No. |
|---|---|
| | PCT/JP2005/005429 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
    A matter common among independent claims 1, 4, and 6 is limited to the
constitution of a conductive thermoplastic resin film which comprises a
thermoplastic resin mixed with a conductive agent and thereby has a volume
resistivity of 10 Ω·cm or lower.  However, films having such volume resistivity
are known as apparent from the fact that they are described in, e.g., documents
1 and 2.  Consequently, that constitution cannot be regarded as a technical
feature which contributes to the prior art.  Furthermore, the film property
regarding moisture permeability described in claims 1 and 6 and the property
regarding peel strength described in claims 4 and 6 are not considered to
    (continued to extra sheet)

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**    ☐ The additional search fees were accompanied by the applicant's protest.

☐ No protest accompanied the payment of additional search fees.

Form PCT/ISA/210 (continuation of first sheet (2)) (January 2004)

**INTERNATIONAL SEARCH REPORT**

International application No.

PCT/JP2005/005429

Continuation of Box No.III of continuation of first sheet(2)

be matters which, at the time of the filing of this application, are recognized by persons skilled in the art as closely relevant to each other.

Form PCT/ISA/210 (extra sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9725738 A
- JP 10004033 A
- JP 10004034 A
- JP 6454607 A
- JP 2003387680 A
- JP 2004086809 A
- JP 2004095040 A